Europäisches Patentamt

European Patent Office

Office européen des brevets

(11) Numéro de publication: **0 232 660 B1**

# (12) FASCICULE DE BREVET EUROPEEN

(45) Date de publication de fascicule du brevet:
13.03.91

(51) Int. Cl.5: **H04L 12/10**, H04L 12/12,
H04L 12/56

(21) Numéro de dépôt: 86402959.0

(22) Date de dépôt: 30.12.86

(54) Terminal d'un réseau de transmissions de données numériques à commutation par paquets.

(30) Priorité: 03.01.86 FR 8600031

(43) Date de publication de la demande:
19.08.87 Bulletin 87/34

(45) Mention de la délivrance du brevet:
13.03.91 Bulletin 91/11

(84) Etats contractants désignés:
BE CH DE ES IT LI LU NL

(56) Documents cités:
EP-A- 0 052 720
US-A- 4 554 541

COMPUTER DESIGN, vol. 22, no. 4, avril 1983,
pages 137-140,142, Winchester, Massachusetts, US; A.J. WEISSBERGER: "BIT oriented
data link controls-part II"

COMPUTER DESIGN, vol. 14, no. 3, mars
1975, pages 81-87, Winchester, US; S.B.
COOPER: "Hardware considerations for high
level data link control communications"

PATENT ABSTRACTS OF JAPAN, vol. 7, no.
292 (E-219)[1437], 27 décembre 1983; & JP-

A-58 166 854

(73) Titulaire: SOCIETE D'APPLICATIONS GENERA-
LES D'ELECTRICITE ET DE MECANIQUE SA-
GEM
6, Avenue d'Iéna
F-75783 Paris Cédex 16(FR)

(72) Inventeur: Charbonnier, Philippe
1, rue de Bellevue Le Mesnil Le Roi
F-78600 Maisons-Laffitte (Yvelines)(FR)

(74) Mandataire: Bloch, Gérard et al
2, square de l'Avenue du Bois
F-75116 Paris(FR)

Il est rappelé que: Dans un délai de neuf mois à compter de la date de publication de la mention de la
délivrance du brevet européen, toute personne peut faire opposition au brevet européen délivré, auprès de
l'Office européen des brevets. L'opposition doit être formée par écrit et motivée. Elle n'est réputée formée
qu'après paiement de la taxe d'opposition (art. 99(1) Convention sur le brevet européen).

## Description

La présente invention concerne un terminal d'un réseau de transmissions de données numériques à commutation par paquets, destiné à échanger avec au moins un autre terminal, et par ledit réseau, des trames d'information disposées entre des drapeaux, ledit terminal comportant des circuits de couche de liaison agencés pour contrôler le bon fonctionnement de la liaison avec le réseau.

En fait, l'invention concerne plus particulièrement un tel terminal utilisateur du réseau, pourvu d'un dispositif de réveil.

Un dispositif de réveil est utilisé dans les terminaux de transmission de données, par exemple les terminaux Télétex, qui doivent en permanence pouvoir recevoir un appel en provenance d'un autre terminal raccordé au réseau, mais dont la durée d'utilisation effective est relativement faible. Un tel dispositif permet de placer le terminal non utilisé dans un état d'activité réduite, où la majeure partie de ses composants n'est pas mise sous tension, ce qui réduit l'énergie électrique consommée et augmente la fiabilité à long terme du terminal. Le dispositif de réveil est susceptible de réveiller à tout moment le terminal, par exemple pour recevoir un appel, ou en réponse à une action de l'opérateur sur une touche.

On connait déjà des dispositifs de réveil, utilisés dans les terminaux raccordés à un réseau à commutation de circuits. Dans un tel réseau, chaque terminal non utilisé n'est raccordé à aucun autre terminal et, au moment où un premier terminal, dit "terminal appelant", souhaite communiquer avec un deuxième terminal, dit "terminal appelé" un ensemble de circuits est commuté pour établir une connexion électrique directe entre le terminal appelant et le terminal appelé. L'appel entrant dans le terminal appelé prend la forme d'un signal électrique de niveau déterminé, par exemple un signal de "sonnerie" analogue à celui du téléphone. Le dispositif de réveil est un simple détecteur de niveau dont la sortie commande la mise sous tension du reste du terminal auquel il est associé. Un tel dispositif de réveil ne peut cependant convenir pour un terminal raccordé à un réseau à commutation par paquets pour les raisons qui vont être maintenant exposées.

Dans un réseau à commutation par paquets, chaque terminal est raccordé en permanence, même pendant les périodes où il n'est pas utilisé, à un noeud du réseau, ou noeud de rattachement, ou point d'accès, lui même raccordé en permanence à un ensemble de noeuds internes interconnectés. Lorsqu'un terminal appelant désire communiquer avec un terminal appelé, le terminal appelant émet, vers le noeud de rattachement auquel il est raccordé des données sous forme de paquets d'éléments binaires, ou bits. Ces paquets comprennent, en premier lieu, une information d'identification du terminal appelé, puis l'information proprement dite à transmettre à ce terminal. Lorsque ces paquets parviennent au noeud de rattachement, ils sont aiguillés vers un premier noeud interne, puis vers un second et ainsi de suite jusqu'au point d'accès auquel est raccordé le terminal appelé, auquel les paquets sont finalement transférés. Ce résultat est obtenu parce que chaque noeud du réseau est doué d'une intelligence qui lui permet, dès qu'il reçoit les paquets, de les aiguiller vers le noeud suivant approprié compte tenu de la destination finale, spécifiée par les bits d'identification du terminal appelé. Ainsi, et contrairement à ce qui se passe pour un réseau à commutation de circuits, il n'est pas nécessaire que le chemin parcouru par les données, entre le terminal appelant et le terminal appelé, se trouve matérialisé par une connexion électrique directe entre le terminal appelant et le terminal appelé. Il en résulte un certain nombre d'avantages connus des réseaux à transmission de paquets, et un certain nombre de contraintes, concernant en particulier le fonctionnement des terminaux. Ces contraintes de fonctionnement peuvent être définies par la norme X25 du CCITT, qui définit un protocole imposant en particulier aux terminaux d'être pourvus d'une certaine intelligence, en plus de celle qui leur est évidemment nécessaire pour coder ou décoder l'information utile contenue dans les paquets de bits qu'ils émettent ou reçoivent.

Ainsi, la norme X25 définit plusieurs niveaux d'intelligence, ou "couches", hiérarchisés, dont doivent être pourvus les terminaux raccordés au réseau et les noeuds de rattachement, et la norme associée X75 décrit les mêmes fonctions entre noeuds internes du réseau. En particulier, se trouve ainsi définie une couche, dite "couche de liaison", qui est prévue pour assurer en permanence une transmission d'informations sans erreurs entre deux noeuds du réseau, que ces noeuds soient des noeuds internes ou des noeuds de rattachement, ou entre un noeud de rattachement et un terminal. Ainsi, en ce qui concerne la liaison entre un noeud de rattachement et un terminal, les contraintes de couche de liaison imposent, pendant les périodes où aucune information utile n'est échangée, que le noeud de rattachement et le terminal échangent en permanence des octets de configuration déterminée, appelés "drapeaux", afin, notamment, de contrôler à tout moment que la liaison est prête à fonctionner. Pendant les périodes où des informations utiles sont échangées, les contraintes de couche de liaison imposent, par exemple, des règles de dialogue permettant la détection et la correction des erreurs.

Le fonctionnement d'un terminal, ou d'un noeud, au niveau de la couche de liaison nécessite le fonctionnement sans défaut de ce terminal, ou de ce noeud, au niveau de la couche hiérarchiquement inférieure, à savoir la couche physique. La couche physique définit les caractéristiques électriques et physiques simples, en particulier les niveaux électriques, les principes de modulation et de démodulation, et les connecteurs, par exemple.

De même, pour un fonctionnement du terminal, ou du noeud, au niveau de la couche hiérarchiquement supérieure à la couche de liaison, à savoir la couche de réseau, il est nécessaire que le fonctionnement soit sans défaut au niveau de la couche de liaison. La couche de réseau définit en particulier les modalités d'adressage et de routage, et contrôle le flux d'informations, par exemple.

Ainsi, pendant les périodes où aucune information n'est émise ou reçue par un terminal donné, il est nécessaire que l'intelligence de ce terminal correspondant à la couche de liaison soit active, pour assurer l'échange de drapeaux avec le noeud de rattachement auquel il est raccordé. Dans cet état, au moment où le réseau veut transférer vers ce terminal des paquets de bits, émis par un terminal appelant, un paquet d'appel, à savoir un ensemble de bits dont la configuration est définie par le protocole de couche de réseau, est émis à la suite des drapeaux par le noeud de rattachement auquel est raccordé ce terminal appelé. Le terminal appelé doit alors reconnaître ce paquet d'appel et réagir en conséquence pour recevoir les paquets porteurs d'informations utiles. Ceci suppose donc toujours l'activité de l'intelligence du terminal correspondant à la couche de liaison.

Ainsi, pour qu'un terminal de transmission de données, raccordé à un réseau de commutation par paquets, soit considéré par ce réseau comme effectivement capable de recevoir un appel, il est nécessaire que les circuits, correspondant à l'intelligence du terminal au niveau de la couche de liaison, qui, par rapport à la couche de réseau à laquelle sont liés les paquets d'appel, est la couche hiérarchiquement inférieure, fonctionnent en permanence, même pendant les périodes d'activité réduite où le terminal n'est pas utilisé pour échanger des informations utiles avec le réseau. Or ces circuits comprennent une partie importante des composants du terminal, qu'il est donc nécessaire de maintenir sous tension en permanence. Dans ces conditions, les avantages de réduction de consommation d'énergie, et de fiabilité, que l'on peut attendre du passage du terminal à un état d'activité réduite pendant les périodes de non-utilisation effective sont minimes et font que, pratiquement, il n'est pas prévu de dispositifs de réveil sur les terminaux devant fonctionner avec un réseau à commutation par paquets, qui fonctionnent donc en permanence pour être capables de recevoir un appel du réseau.

La présente invention vise à pallier cet inconvénient.

Elle a pour objet, à cet effet, un terminal du type défini ci-dessus, caractérisé par le fait qu'il comporte des moyens pour simuler le bon fonctionnement desdits circuits de couche de liaison, lesdits moyens de simulation comportant des moyens d'émission et de réception de drapeaux, lesdits moyens de simulation étant en permanence sous tension et agencés pour commander des moyens de mise sous tension du reste du terminal en l'absence de réception de drapeaux.

Comme, en l'absence de transmissions d'informations utiles, seuls des drapeaux sont échangés entre le réseau et le terminal, il est possible de placer un tel terminal dans un état d'activité réduite pendant les périodes de veille, en laissant hors tension le reste du terminal, l'échange de drapeaux étant alors assuré par les moyens de simulation. Dans cette situation, le réseau voit le terminal dans un état d'activité normale, comme si les circuits de couche de liaison du terminal étaient sous tension.

L'invention est remarquable par le fait qu'elle va à l'encontre du préjugé sur le maintien sous tension permanente des circuits de la couche de liaison.

Dès qu'une absence de drapeau reçu, c'est-à-dire un non-drapeau, est détectée, le reste du terminal est mis sous tension car tout non-drapeau reçu par le terminal signifie que le réseau émet des informations utiles, ou de service, vers le terminal, qui doit donc réagir en conséquence. Comme la tension appliquée au terminal ne s'établit pas instantanément, celui-ci n'est en général pas en mesure de traiter les informations contenues dans le non-drapeau détecté et dans les octets suivant immédiatement. Dans ce cas, la réaction du terminal est incorrecte. Le réseau interprète alors cette réaction incorrecte comme la conséquence d'une erreur de transmission, et il renouvelle, après une durée déterminée, l'émission d'informations vers le terminal, qui est alors en mesure de les recevoir.

Dans une première forme de réalisation, le terminal émet et reçoit lesdites trames d'information sur une entrée principale du réseau et sur une sortie principale du réseau, respectivement et lesdits moyens de simulation comprennent un générateur de drapeaux relié à ladite entrée principale et un détecteur de non-drapeaux relié à ladite sortie principale, la sortie du détecteur de non-drapeaux étant reliée auxdits moyens de mise sous tension du reste du terminal.

Lorsque, pour le terminal précédent, une durée déterminée doit s'écouler, après la mise sous tension dudit reste du terminal, avant que celui-ci ne fonctionne convenablement, il peut être prévu une mémoire tampon reliée à ladite sortie principale pour mémoriser l'information utile reçue pendant ladite durée déterminée.

Dans une deuxième forme de réalisation, le terminal comprend un circuit intégré de type contrôleur de protocole HDLC, ou plus brièvement circuit HDLC, pourvu d'au moins deux accès reliés aux entrée et sortie principales du réseau, et d'un bus de données relié audit reste du terminal et il est prévu des moyens pour isoler ledit circuit HDLC du reste du terminal, et lesdits moyens de simulation comprennent ledit circuit HDLC lorsqu'il est isolé du reste du terminal.

La présente invention sera mieux comprise à l'aide de la description suivante de formes de réalisation du terminal pourvu d'un dispositif de réveil de l'invention, faite en se référant aux dessins annexés, sur lesquels :

- la figure 1 représente un terminal raccordé à un réseau à commutation de paquets,
- la figure 2 représente schématiquement le terminal de la figure 1,
- la figure 3 représente de façon plus détaillée le terminal de la figure 2,
- la figure 4 représente le circuit électronique du terminal de la figure 3,
- la figure 5 représente le détecteur de non-drapeaux du circuit électronique de la figure 4,
- la figure 6 représente le tableau de programmation de la mémoire programmable du détecteur de non-drapeaux de la figure 5,
- la figure 7 représente le diagramme d'états du détecteur de non-drapeaux de la figure 5,
- la figure 8 représente le générateur de drapeaux du circuit électronique de la figure 4,
- la figure 9 représente partiellement une variante de réalisation du circuit électronique de la figure 4,
- la figure 10 représente schématiquement un terminal de type connu,
- la figure 11 représente schématiquement le terminal de la figure 10 modifié conformément à l'invention, et,
- la figure 12 représente la configuration temporelle de signaux échangés entre le terminal et le réseau de la figure 1.

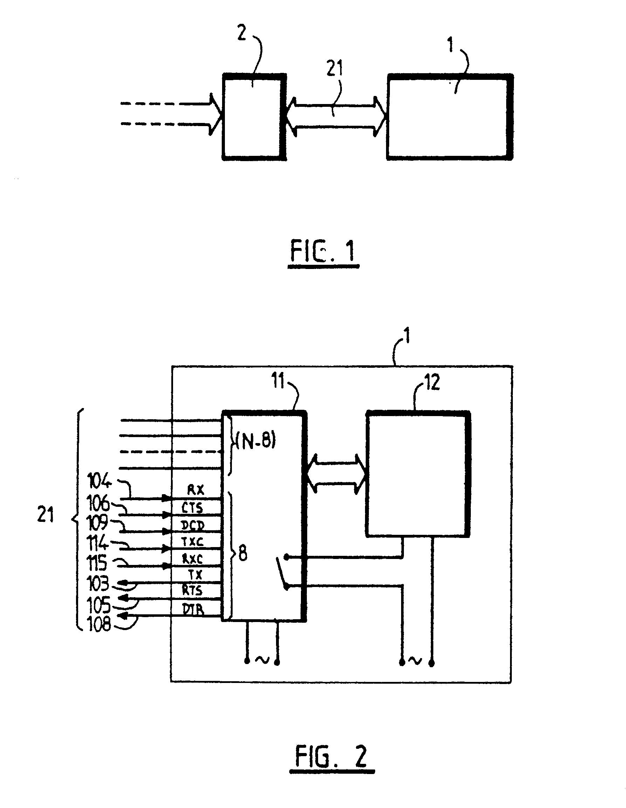

En référence à la figure 1, un terminal 1 de transmission de données numériques est raccordé, par un bus 21, ou jonction, à un équipement de raccordement 2, ou ETCD (Equipement de Terminaison de Circuit de Données), appartenant à un réseau de transmission de données numériques à commutation par paquets.

Comme le montre la figure 2, le terminal 1 comprend un dispositif de réveil 11, alimenté en permanence en énergie électrique, qui commande l'alimentation des autres organes que comprend le reste du terminal, schématisé ici par le bloc 12, par des moyens schématisés par un interrupteur sur la figure. Comme cela sera vu dans la suite, le dispositif de réveil 11 est agencé pour, en coupant l'alimentation du reste du terminal 12, laisser le terminal 1 dans un état d'activité réduite, ou état de veille, pendant les périodes où il n'est pas utilisé effectivement pour émettre ou recevoir des informations utiles. Dès que cela est nécessaire, et en particulier au moment où le réseau appelle le terminal 1 pour lui transmettre des données porteuses d'informations utiles, le dispositif de réveil "réveille" le terminal 1 en rétablissant l'alimentation du reste du terminal 12.

Avant de décrire davantage l'invention, il sera fait une description sommaire, et limitée à ce qui est nécessaire pour la compréhension de l'invention, des procédures spécifiées par la norme X25 du CCITT concernant le dialogue entre un réseau et un terminal de transmission de données à commutation par paquets.

La jonction du type recommandé dans la norme X25, par l'intermédiaire des recommandations X21 bis et V24 du CCITT, relie le terminal 1 à l'ETCD 2 par un certain nombre N de voies de raccordement schématisées par le bus 21 des figures 1 et 2. L'ETCD 2 est également relié à un noeud non représenté du réseau, ou noeud de rattachement, ou point d'accès du terminal 1 au réseau de commutation par paquets. Parmi les différentes voies du bus 21, seules huit d'entre elles, nécessaires à la compréhension de l'invention, seront décrites. Ces huit voies comprennent cinq sorties du réseau, numérotées ordinairement 104, 106, 109, 114 et 115, délivrant des signaux au terminal 1 et trois entrées du réseau numérotées ordinairement 103, 105 et 108, recevant des signaux en provenance du terminal 1.

La voie 104 est la sortie principale du réseau, et elle est utilisée par le réseau pour envoyer des données au terminal 1. Pour le terminal 1, elle est aussi appelée voie de données reçues RX (Receive X).

La voie 106 est une sortie auxiliaire du réseau, active tant que le réseau n'est pas en panne, pour autoriser l'émission de données par l'ETCD vers le réseau. Elle est aussi appelée voie d'accord pour émission CTS (Clear To Send).

La voie 109 est une autre sortie auxiliaire du réseau, qui émet un signal reproduisant l'enveloppe énergétique du signal envoyé sur la voie principale 104. Comme ce signal est obtenu par détection de la porteuse du signal de la voie principale 104, il est aussi appelé signal de détection de porteuse DCD (Data Carrier Detected).

Les voies 114 et 115 sont aussi des sorties auxiliaires du réseau, qui délivrent des signaux d'horloge d'émission et de réception pour le terminal 1, respectivement, afin d'assurer un bon synchronisme entre le terminal et le réseau. Pour le terminal 1, la voie 114 est aussi appelée voie d'horloge pour l'émission TXC (Transmit X Clock) et la voie 115 voie d'horloge pour la réception RXC (Receive X Clock).

La voie 103 est l'entrée principale sur le réseau, utilisée par le terminal 1 pour émettre des données vers le réseau. Elle est aussi appelée voie de données transmises TX (Transmit X).

La voie 105 est une entrée auxiliaire du réseau, active tant que le terminal 1 est en fonctionnement. Pour le terminal 1, elle est aussi appelée voie de demande d'émission RTS (Request To Send).

Enfin, la voie 108 est une autre entrée auxiliaire du réseau, active tant que terminal 1 est en fonctionnement. Pour le terminal 1, c'est une voie qui lui permet d'indiquer qu'il est prêt. Elle est aussi appelée voie D T R (Data Terminal Ready).

La connexion entre le réseau et le terminal 1, que ce dernier soit ou non pourvu d'un dispositif de réveil tel que 11, doit s'établir, conformément aux spécifications de la norme X25, de la façon suivante. Tant que le réseau ne reçoit aucun signal sur la voie 108, il considère que le terminal 1 est totalement déconnecté. Dès que le terminal 1 est alimenté, il active la voie 108, puis la voie 105. Le réseau répond en activant la voie 106. Les voies 108, 105 et 106 restent ensuite à l'état actif pendant tout le temps de connexion du terminal 1, et en particulier pendant les périodes de veille où le terminal 1 ne reçoit ni n'émet aucune information utile, mais reste susceptible d'être appelé par le réseau. Pendant ce même temps, le réseau envoie sur les voies 109, 114 et 115 les signaux de détection de porteuse, d'horloge d'émission et d'horloge de réception respectivement.

Bien que la connexion entre le terminal 1 et le réseau soit réalisée physiquement et électriquement, la liaison entre le terminal 1 et le réseau ne devient effective qu'après échange de trames de service. Une trame de service est une suite de bits de configuration fixe et déterminée, ainsi nommée par opposition à une trame d'information, suite de bits de configuration liée à l'information utile, en général variable, à transmettre. Pour demander l'établissement de la liaison, le terminal 1 envoie sur la voie 103 une trame de service, dite SABM (Set Asynchronous Balanced Mode), car la liaison est en mode asynchrone symétrique.

Le noeud de rattachement au réseau, auquel est relié le terminal 1, vérifie que la trame SABM qu'il reçoit lui a été transmise correctement grâce à un procédé de vérification décrit maintenant. Selon ce procédé, les derniers bits de la trame émise par le terminal 1 sont porteurs d'une information qui résulte d'un calcul déterminé effectué par le terminal 1 sur l'ensemble des bits de la trame. Cette information, dite de contrôle redondant cyclique, est encore appelée CRC (Cyclic Redundant Check). Lorsque le noeud de rattachement reçoit la trame, il effectue le même calcul sur les bits reçus et compare ainsi le CRC de la trame reçue au CRC de la trame émise. La coïncidence des deux CRC permet d'admettre que la transmission a été correcte entre le terminal 1 et le noeud de rattachement auquel il est relié. Dans cette hypothèse, le réseau répond à cette trame SABM par une trame UA (Unnumbered Aknowledge) ou trame d'acquitement non numéroté, par opposition aux trames d'acquitement numérotées des trames d'information, dont il sera question dans la suite. Si le CRC de la trame émise ne coïncide pas avec le CRC de la trame reçue, le réseau n'envoie pas de trame UA et le terminal 1 répète la trame SABM. La bonne transmission de la trame UA, comme celle de la trame SABM, et aussi, par la suite, celle de toutes les trames, y compris les trames d'information, échangées entre le noeud de rattachement et le terminal 1, est vérifiée grâce au procédé CRC qui vient d'être décrit.

La liaison est alors considérée comme établie, par le réseau comme par le terminal. Tant que le terminal n'a pas d'information utile à émettre vers le réseau à destination d'un autre terminal, et tant que le réseau n'a pas d'information utile à transmettre au terminal 1 en provenance d'un autre terminal, le réseau et le terminal échangent des octets de configuration déterminée, ou "drapeaux", contigus. La configuration binaire des drapeaux, ici définie par la norme X25 est 01111110. Ainsi, le réseau émet une suite de drapeaux contigus sur sa sortie principale 104, à laquelle le terminal répond par une suite de drapeaux contigus envoyés sur l'entrée principale 103 du réseau.

Lorsque le terminal 1 désire envoyer des informations utiles à un autre terminal, il cesse d'envoyer des drapeaux sur l'entrée principale 103 du réseau et envoie alors une trame d'information, ou trame I, sur l'entrée principale 103. Cette trame I est, comme toute trame d'information, numérotée, et son numéro est porté par ses premiers bits. De plus, la première trame I émise par le terminal 1 comprend, après le numéro de trame, un paquet d'appel comprenant l'adresse complète du terminal à atteindre. Les trames I suivantes émises par le terminal 1 vers le terminal appelé véhiculeront des paquets de données comprenant une adresse abrégée du terminal appelé, et des données utiles.

Comme cela a déjà été indiqué, la bonne transmission de toute trame I au noeud de rattachement est vérifiée grâce au calcul de CRC, qui acquitte toute trame I bien transmise à l'aide d'une trame de service, dite trame RR ("Receive Ready"), qui comprend, par exemple, le numéro de la trame I qu'elle acquitte. Dans l'hypothèse où le terminal 1 ne reçoit aucune trame RR après avoir émis une trame I, il émet une nouvelle fois la même trame I.

Réciproquement, lorsque le réseau désire transmettre des informations utiles au terminal 1, le noeud de rattachement cesse d'émettre des drapeaux sur la sortie principale 104 et envoie alors une trame I sur cette sortie principale 104. Cette trame I, qui a été élaborée par un terminal appelant, comporte un numéro et un paquet d'appel. Le terminal reconnaît ce paquet d'appel. Après réception complète, calcul et vérification du CRC, le terminal 1 acquitte cette trame I en émettant une trame RR vers le réseau. Si le réseau ne reçoit pas de trame RR après avoir émis la trame I, il émet une nouvelle fois la trame I.

Naturellement, dès que les échanges de trames I cessent entre le réseau et le terminal 1, un échange de drapeaux contigus reprend jusqu'à ce qu'une nouvelle trame I soit échangée.

La figure 12 représente la configuration temporelle du signal sur la voie 103, ou sur la voie 104, pendant l'intervalle de temps correspondant au passage d'une trame I, ou trame d'information 500. Cette trame est précédée et suivie d'octets représentant les drapeaux 600. Elle commence par deux octets d'en-tête 501 correspondant au numéro de trame, elle est suivie par une quantité variable d'octets d'information utile 502, représentant, selon le cas, un paquet d'appel, ou d'information utile, ou autre, et elle se termine par deux octets 503 de CRC.

Lorsque le réseau ne reçoit ni drapeaux, ni information utile pendant une durée prolongée, il conclut à une panne du terminal et s'abstient de passer des appels entrants. Il peut alors, et par exemple, envoyer au terminal une trame de service de mode déconnecté, ou trame DM ("Disconnected Mode") afin de lui faire savoir que la liaison est considérée comme rompue par le réseau. Le terminal peut ainsi éventuellement réagir pour rétablir la liaison.

Dans le fonctionnement qui vient d'être décrit, tout ce qui concerne les caractéristiques physiques et électriques simples est spécifié par un premier ensemble de spécifications de la norme X25 ou "couche physique". Le bon fonctionnement au niveau de la couche physique est nécessaire pour permettre un fonctionnement spécifié par un deuxième ensemble de spécifications ou "couche de liaison". Le bon fonctionnement du terminal 1 au niveau de la couche de liaison suppose une certaine intelligence de ce terminal 1. En effet, les spécifications de couche de liaison concernent essentiellement le contrôle de la bonne transmission entre le terminal 1 et le noeud de rattachement. Cela implique en particulier, pour le terminal 1, la faculté de reconnaître et d'émettre des drapeaux, d'émettre les trames de service SABM et RR, de reconnaître les trames de service UA et DM et de faire les calculs et comparaisons relatifs au CRC. Le bon fonctionnement au niveau de la couche de liaison est nécessaire pour permettre un fonctionnement spécifié par un troisième ensemble de spécifications, ou "couche de réseau". Ces spécifications concernent par exemple l'adressage et le routage des paquets et le contrôle des flux d'informations, et supposent un niveau d'intelligence supérieur à celui nécessaire pour un bon fonctionnement au niveau de la couche de liaison.

Naturellement, des terminaux qui, en restant en permanence et en totalité sous tension, se comportent comme le terminal 1 dont le comportement vient d'être décrit, sont bien connus et disponibles dans le commerce.

Le dispositif de réveil de l'invention permet, lorsqu'il est combiné à l'un de ces terminaux connus, de laisser l'ensemble du terminal dans un état d'activité réduite pendant les périodes où il n'y a pas d'échange d'informations utiles avec le réseau, afin d'une part d'économiser de l'énergie électrique et d'autre part d'améliorer la fiabilité à long terme du terminal.

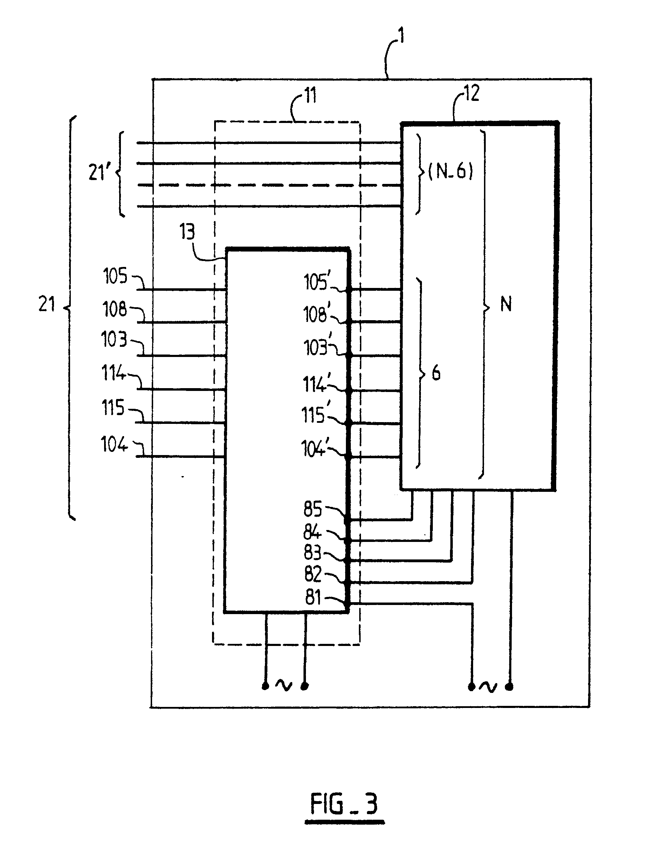

Une première forme de réalisation du dispositif de réveil de l'invention 11 est représentée sur la figure 3. Sur cette figure, le "reste du terminal" représenté par le bloc 12 est un terminal pour réseau à commutation par paquets de type connu. Ce terminal connu 12 est donc pourvu de N accès prévus pour être raccordés aux N voies d'une jonction de type V24 analogue à la jonction décrite. Parmi ces N accès, les six accès prévus pour être normalement raccordés aux voies 105, 108, 103, 114, 115 et 104, définies ci-dessus, d'une jonction de type V24, sont raccordés à six accès 105', 108', 103', 114', 115' et 104', respectivement, d'un circuit électronique 13, pourvu de six autres accès raccordés aux voies 105, 108, 103, 114, 115 et 104 du bus 21. Les (N-6) accès restants du terminal 12 sont raccordés directement aux N-6 voies restantes correspondantes, schématisées par le bus 21'. Le circuit électronique 13 est alimenté en énergie électrique en permanence, tandis que l'alimentation du terminal 12 est commandée par un relais inséré entre des bornes 81 et 82 du circuit électronique 13. Un signal logique représentatif de l'extinction du terminal connu 12 en provenance de celui-ci est appliqué à une entrée 83 du circuit électronique 13. Ce signal "extinction" est au niveau bas lorsque la tension d'alimentation du terminal 12 est inférieure à un seuil au dessous duquel le bon fonctionnement du terminal connu 12 n'est plus assuré, et au niveau haut lorsque le terminal connu 12 est en fonctionnement.

De même, un signal logique représentatif de causes de réveil autres que l'appel du terminal 1 par le réseau est appliqué à une entrée 84 du circuit électronique 13. Ce signal "autres causes de réveil" passe au niveau haut, par exemple, dès qu'un opérateur actionne une touche quelconque du terminal connu 12, chaque jour à une certaine heure où un appel est à faire, ou pour toute autre cause de réveil. Dans l'hypothèse où ces signaux ne seraient pas disponibles sur le terminal 12, il est clair qu'il est à la portée de l'homme de métier de les élaborer au prix de modifications simples sur le terminal connu 12, en utilisant cependant pour alimenter en énergie électrique les circuits nécessaires, une tension d'alimentation délivrée en permanence par le circuit électronique 13 sur une borne 85.

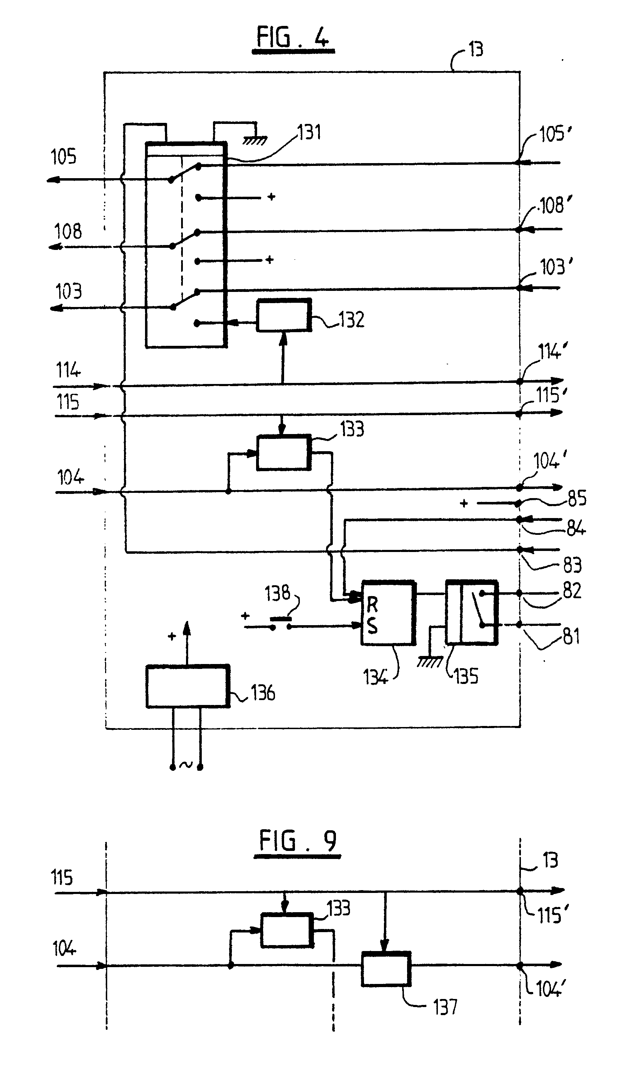

En référence à la figure 4, le circuit électronique 13 comprend un relais 131 à trois commutateurs couplés, commandé par le signal d'extinction appliqué sur l'entrée 83. Chaque commutateur comprend une sortie et deux entrées. Lorsque le signal d'extinction est au niveau haut les trois sorties, respectivement reliées aux entrées auxiliaires 105, 108 et à l'entrée principale 103, sont commutées sur trois entrées respectivement reliées aux accès 105', 108' et 103'. Lorsque le signal d'extinction est au niveau bas, les deux sorties 105 et 108 sont commutées sur deux entrées reliées à une tension continue correspondant à l'activation des voies 105 et 108, et la sortie 103 est commutée sur une entrée reliée à la sortie d'un générateur de drapeaux 132. La voie d'horloge d'émission 114 est reliée à une entrée d'horloge du générateur de drapeaux 132 et à l'accès 114'. La voie d'horloge de réception 115 est reliée à une entrée d'horloge d'un détecteur de non-drapeaux 133, et à l'accès 115'.

La sortie principale 104 est reliée à l'entrée de signal du détecteur de non-drapeaux 133 et à l'accès 104'. La sortie du détecteur de non-drapeaux 133 est reliée à une première entrée R d'une bascule 134 de type connu, ici une bascule RS, dont une sortie commande un relais 135 à un commutateur monté entre les bornes 81 et 82. La première entrée R de la bascule 134 est double et reçoit également le signal "autres causes de réveil" appliqué à l'entrée 84. La deuxième entrée S de la bascule 134 est reliée par l'intermédiaire d'un bouton-poussoir 138, à une tension continue de valeur convenable pour commander le changement d'état de la bascule 134. Un circuit d'alimentation en énergie électrique 136, de type connu, alimente en permanence, et de façon non représentée car classique, les constituants du circuit électronique 13, et la borne 85.

Avant de décrire la constitution du générateur de drapeaux 132 et du détecteur de non-drapeaux 133, décrivons le fonctionnement du circuit électronique 13. Dès que le circuit électronique 13 est alimenté, l'opérateur actionne par exemple une touche quelconque du terminal connu 12, pour activer le signal "autres causes de réveil". La bascule 134 est ensuite et à coup sûr dans un état qui commande la fermeture du relais 135. Le terminal 12 est donc alimenté et le signal d'extinction, au niveau haut, commande le relais 131 de façon à ce que les voies 105, 108 et 103 soient reliées au terminal 12. Les voies 114, 115 et 104 étant toujours reliées au terminal 12, le fonctionnement est alors identique à celui qui a été décrit plus haut, avec échange de trames de service SABM, UA, DM, RR et de trames d'information I. Il est à noter que pendant ce temps, la détection de non-drapeaux par le détecteur 133 est sans conséquence sur l'état de la bascule 134. Lorsque l'opérateur désire placer le terminal 1 en état de veille, il actionne le bouton poussoir 138. Ceci entraîne le changement d'état de la bascule 134 et la mise hors tension du reste du terminal, ici le terminal connu 12. Dès que celui-ci n'est plus en mesure d'assurer sa mission normale, le signal d'extinction passe au niveau bas. Le relais 131 commute, les voies 105 et 108 continuent à être activées et la sortie du générateur de drapeaux 132 est appliquée à l'entrée principale 103 sur le réseau. Le réseau continue donc à recevoir les mêmes drapeaux. Par ailleurs, le détecteur de non drapeaux 133 surveille les signaux émis sur la sortie principale 104. Tant que le réseau émet des drapeaux, parce qu'il n'a aucune trame d'information à émettre, le terminal 1 reste donc dans cet état, où seule l'alimentation 136 est en fonctionnement et où le reste du terminal, ici le terminal connu 12, n'est pas alimenté, donc au repos. Il est à noter que pendant tout ce temps, alors que seuls le générateur de drapeaux 132 et le détecteur de non drapeaux 133 sont actifs, tout se passe, pour le réseau, comme si les circuits assurant l'intelligence de couche de liaison du terminal 1 étaient actifs, puisqu'il y a eu échange de trames SABM et UA. Cet état d'activité réduite, ou de veille, cesse lorsque le signal "autres causes de réveil" est activé, pendant une courte période, ou lorsque le détecteur 133, ayant détecté un non-drapeau, délivre une impulsion en sortie. Dans le premier cas de réveil, à l'initiative du terminal 1, le terminal connu 12 "reprend la maîtrise" et le fonctionnement normal est réactivé. Dans le second cas de réveil, à l'initiative du réseau, la détection de non-drapeaux est le plus souvent consécutive à l'envoi d'une trame I, comprenant un paquet d'appel vers le terminal 1. Dans ce cas, l'établissement de la tension d'alimentation du terminal connu 12 n'étant pas immédiate, il est clair que le paquet d'appel ne pourra être reconnu par le terminal connu 12 et sera donc perdu. Toutefois, comme le réseau ne recevra du terminal 1 aucune trame RR acquitant la trame I, il interprêtera l'indisponibilité du terminal connu 12 comme une erreur de transmission et émettra à nouveau la trame I, après un temps prédéterminé. Le terminal connu 12 sera alors en mesure d'acquitter la trame I reçue, par une trame RR et le fonctionnement reprendra normalement. On notera que le réveil du terminal 1 se produit aussi lorsque, par exemple après un incident dans la transmission des drapeaux, le réseau émet une trame DM. Là encore, si le terminal 12 n'est pas en mesure de répondre à cette trame DM parce que sa tension d'alimentation n'est pas encore établie, le réseau répètera cette trame DM après un temps prédéterminé et, après échange de trames SABM et UA, le fonctionnement normal reprendra. Evidemment, il en est ainsi pour toute cause se traduisant par l'émission d'un non-drapeau par le réseau.

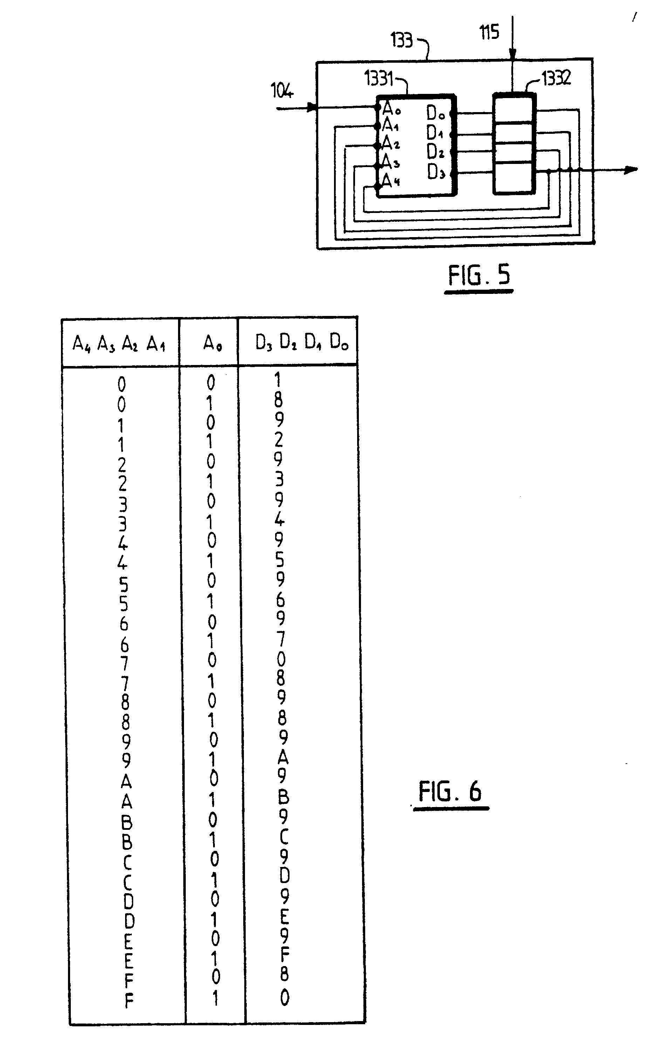

En référence à la figure 5, le détecteur de non-drapeaux 133 comprend ici une mémoire programmable 1331, dont 32 cases mémoires, adressables par conséquent à l'aide de cinq entrées binaires $A_0$ $A_1$ $A_2$ $A_3$ et $A_4$, contiennent chacune quatre bits de données délivrés sur des sorties $D_0$ $D_1$ $D_2$ $D_3$. De façon connue, les sorties $D_0$, $D_1$, $D_2$, et $D_3$ sont bouclées sur les entrées d'adresses $A_1$, $A_2$, $A_3$ et $A_4$ respectivement, par l'intermédiaire d'un registre parallèle 1332 commandé par le signal d'horloge de réception 115. Le signal reçu sur la sortie principale 104 du réseau est appliqué à l'entrée d'adresse de plus faible poids $A_0$ et la sortie du détecteur de non-drapeaux est constituée par la sortie de plus fort poids $D_3$. La mémoire 1331 est programmée conformément au tableau de la figure 6, où la configuration des 4 bits $A_1$ $A_2$ $A_3$ $A_4$, est codée de façon condensée en code hexadécimal (0-15 en équivalent décimal) et qui combinée au bit associé à $A_0$ constitue bien les 32 adresses des 32 cases de la mémoire. Sur la figure 6, la configuration des 4 bits $D_0$ $D_1$ $D_2$ $D_3$ est également codée en code hexadécimal.

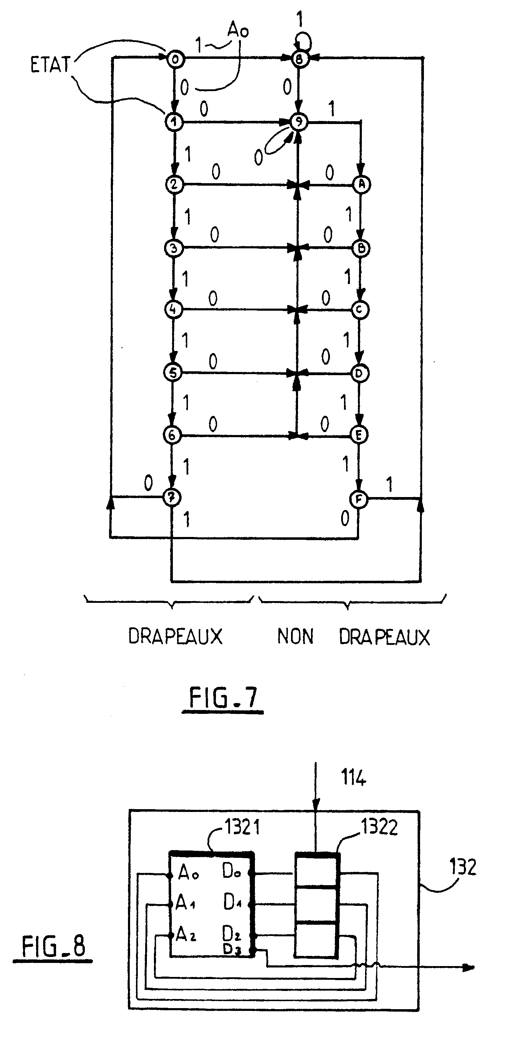

La figure 7 représente le diagramme des états successifs des 4 bits de sortie $D_0$ $D_1$ $D_2$ $D_3$ en fonction du bit reçu sur l'entrée $A_0$.

Lorsqu'un tel système reçoit une suite de drapeaux contigus 01111110 sur l'entrée 104, le code hexadécimal des états successifs suit la séquence 0, 1, 2, 3, 4, 5, 6, 7, 0, 1, 2, 3, 4, 5, 6, 7, ... et ainsi de suite. Dès que la configuration des bits reçus change, le système passe par un état dont le code hexadécimal est supérieur ou égal à 8. La sortie $D_3$ est donc représentative de la détection d'un non-drapeau.

En référence à la figure 8, le générateur de drapeaux 132 comprend ici une mémoire programmable 1321, dont 8 cases mémoires, adressables à l'aide de trois entrées binaires $A_0$ $A_1$ $A_2$, contiennent chacune quatre bits de données délivrés sur les sorties $D_0$ $D_1$ $D_2$ $D_3$. De façon connue, les sorties $D_0$ $D_1$ $D_2$ sont bouclées sur les entrées d'adresses $A_0$ $A_1$ $A_2$ respectivement, par l'intermédiaire d'un registre parallèle 1322 commandé par le signal d'horloge d'émission 114. La mémoire 1321 est programmée de façon connue pour que les bits $D_0$ $D_1$ $D_2$ contenus dans une case mémoire représentent l'adresse de la case mémoire suivante, le bit $D_3$ prenant successivement d'une case à l'autre les valeurs 0 111 111 0. Le fonctionnement d'un tel système est simple: par le bouclage des données $D_0$ $D_1$ $D_2$ sur les entrées d'adresse $A_0$ $A_1$ $A_2$, les huit cases sont décrites toujours dans le même ordre, à la cadence de l'horloge de réception 114, et le signal de sortie est formé d'une suite de drapeaux contigus.

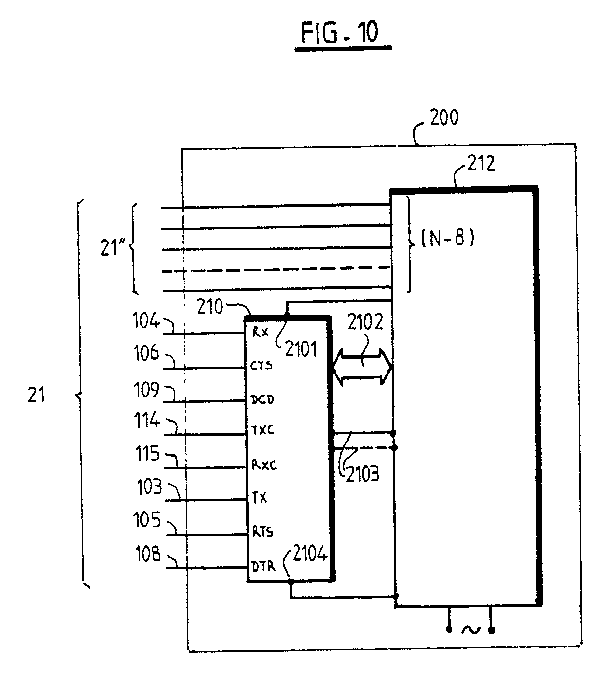

Dans une variante de la première forme de réalisation du dispositif de l'invention, mise en évidence sur le schéma partiel de la figure 9, une mémoire tampon 137 du type FIFO (First Input First Output) est intercalée entre l'entrée du détecteur de non drapeaux 133 et l'accès 104' du circuit électronique 13. Le signal d'horloge de réception 115 est appliqué à une entrée d'horloge de la mémoire 137.

L'utilisation d'une telle mémoire tampon 137 permet, en cas de réveil du terminal 1 par le réseau, de mémoriser les données reçues pendant le temps mis par la tension d'alimentation du reste du terminal 12 pour s'établir. Ainsi, aucune information n'est perdue, et le réseau n'a pas à répéter la trame I. Dans le montage de la figure 9, les données reçues sur la voie 104 sont en permanence retardées, même pendant les périodes où le terminal connu 12 est en fonctionnement. Ceci peut être évité en prévoyant un "shunt" de la mémoire 137, lorsque le signal d'extinction est au niveau haut. Il est également possible, pour réduire la taille de la mémoire tampon 137, de commander, à l'aide de la sortie du détecteur de non-drapeaux 133 l'inscription des données dans cette mémoire, de façon à n'inscrire que les informations utiles, et non les drapeaux. On peut également prévoir, pour rattraper le temps perdu pendant le "réveil" du reste du terminal 12, une lecture des données à un rythme plus rapide que leur rythme d'écriture, imposé par le signal d'horloge de réception 115. Tous ces aménagements, à la portée de l'homme de métier, ne seront pas décrits davantage.

Dans une deuxième forme de réalisation du dispositif de l'invention, on utilise un terminal de type connu, pourvu, comme cela est courant, d'un circuit intégré de type contrôleur HDLC (Highrate Data Link Controller), par exemple du type commercialisé par la société ZILOG sous la référence Z80SIO ou par la société INTEL sous la référence 8274.

De tels circuits transforment les données séries en données parallèles et inversement, calculent le CRC, engendrent les drapeaux, et détectent les non-drapeaux, par exemple. Sur la figure 10 est représenté un terminal 200 de type connu, pourvu d'un circuit HDLC 210 de type également connu, le reste du terminal étant schématisé par le bloc 212. Le terminal 200 est pourvu de N accès prévus pour être raccordés aux N voies d'une jonction du type V24. Parmi ces N accès, les huit accès raccordés aux voies 104, 106, 109, 114, 115, 103, 105 et 108 définies plus haut de la jonction 2, sont raccordés aux accès RX, CTS, DCD, TXC, RXC, TX, RTS et DTR dont est pourvu le circuit HDLC. Les (N-8) autres voies, schématisées par le bus parallèle 21″, sont raccordées directement à N-8 accès du reste du terminal 212. Une entrée d'horloge 2101, et une sortie d'interruption 2104 du circuit HDLC 210 sont reliées au reste du terminal 212. Un bus 2102, contrôlé par des voies de contrôle 2103, permet l'échange de données entre le circuit HDLC 210 et le reste du terminal 212. Le circuit HDLC 210 fournit une interruption au reste du terminal 212, par sa sortie d'interruption 2104, pour, par exemple, chaque début de trame, chaque fin de trame, détectés tous deux grâce à un détecteur de drapeaux et non drapeaux interne, et pour d'autres évènements non mentionnés car n'intervenant pas dans la compréhension de l'invention. En l'absence d'échange d'informations utiles, le circuit HDLC 210 émet des drapeaux contigus et surveille les drapeaux reçus sur son entrée RX.

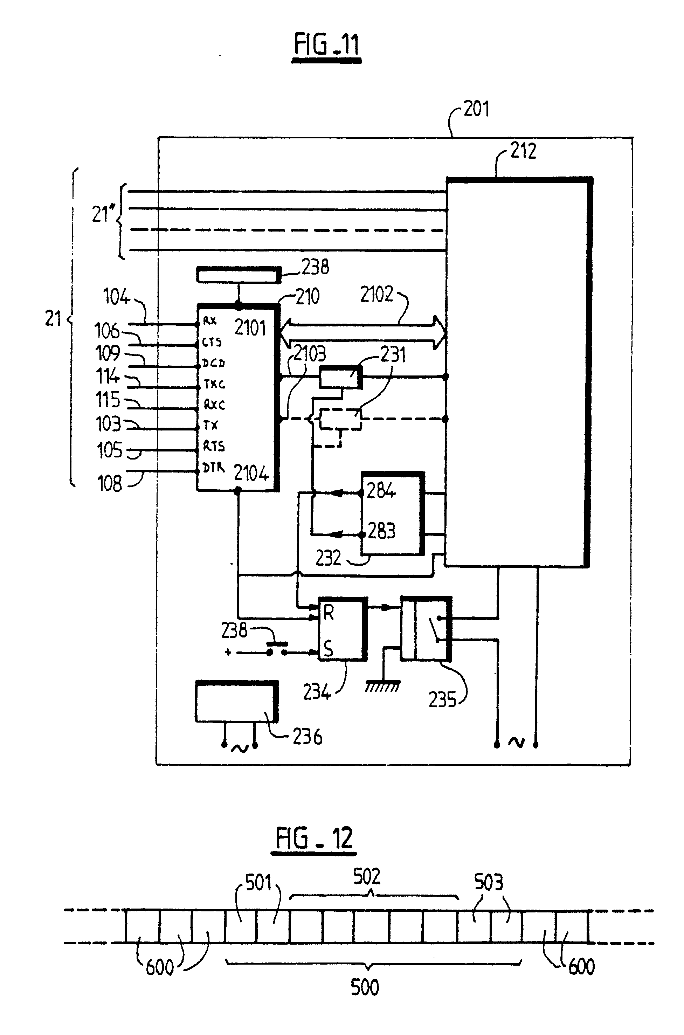

La deuxième forme de réalisation du dispositif de réveil de l'invention est obtenue en modifiant le terminal connu 200 de la figure 10 pour le rendre conforme au terminal modifié 201 de la figure 11.

Une alimentation en énergie électrique 236 de type connu est prévue, qui reste sous tension en permanence pour alimenter, de façon connue et donc non représentée, le circuit HDLC 210 et les circuits qui vont maintenant être décrits. L'entrée 2101 est déconnectée du reste du terminal 212 et reliée à une horloge 238 de type connu alimentée par l'alimentation 236. Sur les voies de contrôle 2103, sont intercalées des portes trois états 231 de type connu, alimentées par un signal disponible sur une sortie 283 d'un circuit de commande 232 décrit ultérieurement. Un signal disponible sur une sortie 284 du circuit de commande 232 est appliqué à une première entrée R d'une bascule 234 de type connu, ici une bascule RS, alimentée par l'alimentation 236, dont la sortie commande un relais 235 à un commutateur pouvant couper l'alimentation du reste du terminal 212. La première entrée R de la bascule 234 est double et reçoit également le signal d'interruption de la sortie 2104 du circuit HDLC 210. La deuxième entrée S de la bascule 234 est reliée, par l'intermédiaire d'un bouton-poussoir 238 à une tension continue de valeur convenable pour commander son changement d'état. Le circuit de commande 232, alimenté par l'alimentation 236, délivre sur la sortie 283 un signal d'extinction caractéristique de l'extinction de l'alimentation du reste du terminal 212 et, sur la sortie 284, un signal "autres causes de réveil" du type déjà rencontré. La conception du circuit 232 est à la portée de l'homme de métier.

Le fonctionnement du dispositif représenté sur la figure 11 est le suivant. Tant que la bascule 234 est dans un état correspondant à l'alimentation du reste du terminal 212, les portes 231 sont alimentées, et les échanges de données entre le circuit HDLC 210 et le reste du terminal 212 se font normalement, via le bus 2102. Lorsque l'opérateur décide de passer à l'état de veille, il actionne le bouton-poussoir 238 et la bascule 234 coupe l'alimentation du reste du terminal 212. Alors le signal d'extinction sur la sortie 283 passe au niveau bas, ce qui fait passer les portes 231 dans leur état "haute impédance" où elles isolent totalement le circuit HDLC 210 du reste du terminal 212, les communications sur le bus 2102 étant alors gelées.

Cependant, le circuit HDLC 210, toujours alimenté par l'alimentation 236, et piloté par l'horloge 238, continue à fonctionner et en particulier, il émet des drapeaux contigus sur l'accès TX, et surveille les drapeaux reçus sur l'accès RX. Dès qu'il détecte un non-drapeau, il engendre un signal sur la sortie 2104 qui provoque le changement d'état de la bascule 234 et le "réveil" du reste du terminal 212. Le fonctionnement est ensuite analogue à celui déjà décrit, avec répétition par le réseau de la trame I car, dans cette forme de réalisation, il n'y a pas de mémoire tampon.

Dans la description qui vient d'être faite, les niveaux logiques n'ont pas été précisés et ont été implicitement supposés compatibles les uns avec les autres. Dans la plupart des cas, il est commode d'utiliser des circuits travaillant avec des niveaux logiques de 0 et 5 V alors que, sur le réseau, les niveaux logiques sont de + 12 V et - 12 V. On utilise alors des translateurs de niveaux, bien connus de l'homme de métier, et qui ne sont pas représentés pour des raisons de simplicité.

Dans les dispositifs qui viennent d'être décrits, il peut être utile de modifier le terminal connu pour élaborer un signal de mise en veille automatique, par exemple après un temps déterminé sans échanges, ou dans d'autres conditions. Une telle modification est évidemment à la portée de l'homme de métier. Le signal résultant est alors appliqué sur la seconde entrée de la bascule commandant l'alimentation du reste du terminal. Une telle modification présente en outre l'avantage d'éviter à l'opérateur de surveiller les échanges, pour ne pas provoquer une mise en veille intempestive qui, se produisant alors que le réseau délivre des informations utiles, serait d'ailleurs immédiatement suivie d'un réveil du reste du terminal.

Bien entendu, il est possible, avec un détecteur de non-drapeaux du type de celui de la figure 5, comme avec le circuit HDLC de la figure 11, de définir, pour des applications particulières, des critères plus précis de réveil, afin de ne pas réveiller le terminal pour tous les non-drapeaux. Dans un tel cas, on effectuerait, par exemple, un tri sur le premier octet du non-drapeau détecté.

Dans la description précédente, le générateur de drapeaux met en oeuvre une mémoire à 3 entrées binaires d'adressage et 4 sorties binaires de données. Ce nombre n'est pas limitatif et, M et M′ étant deux nombres entiers, on peut utiliser une mémoire à M entrées binaires d'adressage et M′ sorties binaires de données. De même, dans le détecteur de non-drapeaux, une mémoire à P entrées binaires d'adressage, et P′ sorties binaires de données peut être utilisée, P et P′ étant deux nombres entiers.

Naturellement, il est également possible de réaliser le générateur de drapeaux et le détecteur de non-drapeaux sous d'autres formes.

**Revendications**

1. Terminal (1) d'un réseau de transmissions de données numériques à commutation par paquets, destiné à échanger avec au moins un autre terminal, et par ledit réseau, des trames d'information (500) disposées entre des drapeaux (600), ledit terminal (1) comportant des circuits de couche de liaison (210) agencés pour contrôler le bon fonctionnement de la liaison avec le réseau, terminal caractérisé par le fait qu'il comporte des moyens (131, 132, 133; 238, 210, 231) pour simuler le bon fonctionnement desdits circuits de couche de liaison, lesdits moyens de simulation comportant des moyens (132, 133; 210) d'émission et de réception de drapeaux, lesdits moyens de simulation étant en permanence sous tension et agencés pour commander des moyens (134, 135; 234, 235) de mise sous tension du reste du terminal (12; 212) en l'absence de réception de drapeaux.

2. Terminal selon la revendication 1, émettant et recevant lesdites trames d'information sur une entrée principale (103) du réseau et sur une sortie principale (104) du réseau, respectivement, dans lequel lesdits moyens de simulation comprennent un générateur de drapeaux (132) relié à ladite entrée principale (103) et un détecteur de non-drapeaux (133) relié à ladite sortie principale (104), la sortie du détecteur de non-drapeaux (133) étant reliée auxdits moyens de mise sous tension du reste du terminal (12).

3. Terminal selon la revendication 2, pour lequel une durée déterminée doit s'écouler, après la mise sous tension dudit reste du terminal (12), avant que celui-ci ne fonctionne convenablement, dans lequel il est prévu une mémoire tampon (137) reliée à ladite sortie principale (104) pour mémoriser l'information utile reçue pendant ladite durée déterminée.

4. Terminal selon l'une des revendications 2 ou 3, dans lequel le détecteur de non-drapeaux (133) comprend une mémoire programmable (1331) à P entrées binaires d'adressage ($A_0$ $A_1$ $A_2$ $A_3$ $A_4$) et (P-1) sorties binaires de données ($D_0$ $D_1$ $D_2$ $D_3$), les (P-1) sorties binaires de données étant rebouclées par l'intermédiaire d'un registre parallèle (1332) sur les (P-1) entrées binaires d'adressage de plus fort poids, l'entrée binaire d'adressage de plus faible poids ($A_0$) étant l'entrée du détecteur de non-drapeaux et la sortie binaire de données de plus fort poids ($D_3$) étant la sortie du détecteur de non-drapeaux.

5. Terminal selon l'une des revendications 2, 3 ou 4 dans lequel le générateur de drapeaux (132) comprend une mémoire programmable (1321) à M entrées binaires d'adressage ($A_0$ $A_1$ $A_2$) et M + 1 sorties binaires de données ($D_0$ $D_1$ $D_2$ $D_3$), M sorties binaires de données étant rebouclées par l'intermédiaire d'un registre parallèle (1322) sur les M entrées binaires d'adressage, la (M + 1)ème sortie binaire de données ($D_3$) étant la sortie du générateur de drapeaux.

6. Terminal selon l'une des revendications 2, 3, 4 ou 5, dans lequel il est prévu des moyens (131), commandés dès que la tension appliquée audit reste du terminal (12) est supérieure à un seuil déterminé, pour commuter l'entrée principale (103) depuis la sortie du générateur de drapeaux vers le reste du terminal (12), et inversement.

7. Terminal selon la revendication 1, émettant et recevant lesdites trames d'information sur une entrée principale (103) du réseau et sur une sortie principale (104) du réseau, respectivement, comprenant un circuit intégré de type HDLC (210), pourvu d'au moins deux accès (TX, RX) reliés auxdites entrée (103) et sortie (104) principales, respectivement, et d'un bus de données (2102) relié audit reste du terminal (212), dans lequel il est prévu des moyens (231) pour isoler ledit circuit HDLC (210) du reste du terminal (212), et lesdits moyens de simulation comprennent ledit circuit HDLC (210) lorsqu'il est isolé du reste du terminal (212).

8. Terminal selon la revendication 7, dans lequel ledit circuit intégré de type HDLC (210) est pourvu d'accès RX, CTS, DCD, TXC, RXC, TX, RTS et DTR reliés aux entrées et sorties correspondantes du réseau, d'une sortie d'interruption (2104) reliée auxdits moyens (234, 235) de mise sous tension du reste du terminal (212), d'une entrée d'horloge reliée à une horloge (238) en permanence sous tension, et de voies de contrôle (2103) dudit bus (2102), et lesdits moyens pour isoler ledit circuit HDLC (210) sont des portes trois états (231) intercalées sur lesdites voies de contrôle (2103).

9. Terminal selon les revendications 7 ou 8, dans lequel les portes trois états (231) sont commandées pour isoler ledit circuit HDLC (210) dès que la tension appliquée audit reste du terminal (212) est inférieure à un seuil déterminé, et inversement.

10. Terminal selon l'une des revendications 1 à 9, dans lequel lesdits moyens de mise sous tension du reste du terminal (12; 212) comprennent une bascule (134; 234) suivie d'un commutateur à relais (135; 235). .

## Claims

1. Terminal (1) of a digital data transmission network with packet switching, for exchanging with at least one other terminal, and over said network, information frames (500) disposed between flags (600), said terminal (1) including connecting layer circuits (210) adapted for checking the correct operation of the connection with the network, which terminal is characterized by the fact that it includes means (131,l32,l33;238,210;231) for simulating the correct operation of said connecting layer circuits, said simulation means including means (132,133;2l0) for transmitting and receiving flags, said simulation means being permanently switched on and adapted for controlling means (134,135;234,235) for switching on the rest of the terminal (12;212) in the absence of reception of flags.

2. Terminal according to claim 1, transmitting and receiving said information frames at a main input (103) of the network and at a main output (104) of the network, respectively, wherein said simulation means include a flag generator (132) connected to said main input (103) and a non flag detector (133) connected to said main output (104), the output of the non flag detector (133) being connected to said means for switching on the rest of the terminal (12).

3. Terminal according to claim 2, in which a given time must elapse, after switching on of the rest of the circuit (12), before this latter operates suitably, wherein a buffer memory (137) is provided connected to said main output (104) for storing the useful information received during said given time.

4. Terminal according to one of claims 2 or 3, wherein the non flag detector (133) includes a programmable memory (1331) with P binary addressing inputs ($A_0$ $A_1$ $A_2$ $A_3$ $A_4$) and (P-1) binary data outputs ($D_0$ $D_1$ $D_2$ $D_3$), the (P-1) binary data outputs being relooped through a parallel register (1332) to the (P-1) most significant binary addressing inputs, the least significant binary addressing inputs ($A_0$) being the input of the non flag detector and the most significant binary data output ($D_3$) being the output of the non flag detector.

5. Terminal according to one of claims 2, 3 or 4, wherein the flag generator (132) includes a programmable memory (1321) with M binary addressing inputs ($A_0$ $A_1$ $_{A2}$) and M + 1 binary data outputs ($D_0$ $D_1$ $D_2$ $D_3$), M binary data outputs being relooped through a parallel register (1322) to the M binary addressing inputs, the (M + 1)th binary data output ($D_3$) being the output of the flag generator.

6. Terminal according to one of claims 2,3,4 or 5, wherein means (131) are provided, controlled as soon as the voltage applied to the rest of the terminal (12) is higher than a given threshold, for switching the main input (103) from the output of the flag generator to the rest of the terminal (12), and conversely.

7. Terminal according to claim 1, emitting and receiving said information frames at a main input (103) of the network and at a main output (104) of the network, respectively, including an integrated HDLC type circuit (210) having at least two accesses (TX,RX) connected to said main input (103) and output (104), respectively, and a data bus (2102) connected to said rest of the terminal (212), wherein means (231) are provided for isolating said HDLC circuit (210) from the rest of the terminal (212), and said simulation means include said HDLC circuit (210) when it is isolated from the rest of the terminal (212).

8. Terminal according to claim 7, wherein said integrated HDLC type circuit (210) is provided with accesses RX, CTS, DCD, TXC, RXC, TX, RTS and DTR connected to the corresponding inputs and outputs of the network, an interruption output (2104) connected to said means (234,235) for switching on the rest of the terminal (212), a clock input connected to a clock (238) permanently switched on, and control channels (2103) of said bus (2102), and said means for isolating said HDLC circuit (210) are three state gates (231) inserted in said control channels (2103).

9. Terminal according to claim 7 or 8, wherein the three state gates (231) are controlled for isolating said HDLC circuit (210) as soon as the voltage applied to the rest of the terminal (212) is less than a given threshold and conversely.

10. Terminal according to one of claims 1 to 9, wherein said means for switching on the rest of the terminal (12;212) include a flip flop (134;234) followed by a relay switch (135;235).

**Ansprüche**

1. Terminal (1) für ein digitales Datenübertragungsnetz mit Paket-Vermittlung, dazu bestimmt, mit wenigstens einem anderen Terminal, und über das genannte Netz Datenrahmen (500), die zwischen Flaggen (600) angeordnet sind, auszutauschen, wobei das genannte Terminal (1) Interface-Schaltkreise (210), eingerichtet für die Kontrolle des richtigen Funktionierens der Verbindung mit dem Netz, umfaßt, dadurch gekennzeichnet, daß es Mittel (131, 132, 133; 238, 210, 231) für die Simulierung des richtigen Funktionierens der genannten Interfaceschaltkreise umfaßt, wobei die genannten Mittel zur Simulation Mittel (132, 133; 210) der Aussendung und des Empfangs der Flaggen umfassen, und wobei die genannten Mittel zur Simulation ständig unter Spannung stehen und eingerichtet sind, um Mittel (134, 135; 234,235) zur In-Spannung-Setzung des Rests des Terminals (12;212) in Abwesenheit des Empfangs von Flaggen zu steuern.

2. Terminal nach Anspruch 1, das die genannten Datenrahmen auf einem Haupteingang (103) des Netzes und auf einem Hauptausgang (104) des Netzes jeweils aussendet und empfängt, in dem die genannten Mittel zur Simulation einen Flaggengenerator (132) umfassen, angeschlossen an den genannten Haupteingang (103) und einen Nicht-Flaggen-Detektor (133), angeschlossen an den genannten Hauptausgang (104), wobei der Ausgang des NichtFlaggen-Detekjors (133) an die genannten Mittel zur In-Spannung-Setzung des Rests des Terminals (12) angeschlossen ist.

3. Terminal nach Anspruch 2, für das nach der In-Spannung-Setzung des Rests des Terminals (12) eine festgelegte Dauer ablaufen muß, bevor dieses in entsprechender Weise funktioniert, in welchem ein Pufferspeicher (137) vorgesehen ist, der an den genannten Hauptausgang (104) angeschlossen ist, um die während der genannten festgelegten Dauer empfangene nutzbare Information zu speichern.

4. Terminal nach einem der Ansprüche 2 oder 3, in welchem der Nicht-Flaggen-Detektor (133) einen programmierbaren Speicher (1331) umfaßt mit P binären Adreßeingängen (AO A1 A2 A3 A4) und (P-1) binären Datenausgängen (DO D1 D2 D3), wobei die (P-1) binären Datenausgänge über das Zwischenelement eines Parallelregisters (1332) auf die (P-1) binären höchstwertigen Adreßeingänge zurückgeführt sind, wobei der niedrigstwertige binäre Adreßeingang (A0) der Eingang des Nicht-Flaggen-Detektors ist, und der höchstwertige binäre Datenausgang (D3) der Ausgang des Nicht-Flaggen-Detektors ist.

5. Terminal nach einem der Ansprüche 2, 3 oder 4, in welchem der Flaggengenerator (132) einen programmierbaren Speicher (1321) umfaßt, mit M binären Adrefleingängen (A0 A1 A2) und M + 1) binären Datenausgängen (D0 D1 D2 D3), wobei M binäre Datenausgänge über das Zwischenelement eines Parallelregisters (1322) auf die M binären Adreßeingänge zurückgeführt sind, wobei der (M + 1)te binäre Datenausgang (D3) der Ausgang des Flaggengenerators ist.

6. Terminal nach einem der Ansprüche 2, 3 4 oder 5, in welchem Mittel (131) vorgesehen sind, die sobald die im Rest des Terminals (12) verwendete Spannung größer ist als eine festgesetzte Schwelle, aktivierbar sind, um den Haupteingang (103) vom Ausgang des Flaggengenerators auf den Rest des Terminals (12) umzuschalten, und umgekehrt.

7. Terminal nach Anspruch 1, welches die genannten Datenrahmen über einen Haupteingang (103) des Netzes und einen Hauptausgang (104) des Netzes jeweils aussendet und empfängt, und welches einen integrierten Schaltkreis vom Typ HDLC (210) umfaßt, ausgestattet mit wenigstens zwei Zugängen (TX,RX) die jeweils an den genannten Haupteingang (103) und Hauptausgang (104) angeschlossen sind, und ausgestattet mit einem Datenbus (2102) angeschlossen an den genannten Rest des Terminals (212), in welchem Mittel (231) zur Isolierung des genannten HDLC-Schaltkreises (210) vom Rest des Terminals (212) vorgesehen sind, und wobei die genannten Mittel zur Simulation den genannten HDLC-Schalt-kreis (210) umfassen, wenn er vom Rest des Terminals (212) isoliert ist.

8. Terminal nach Anspruch 7, in welchem der genannte Schaltkreis vom Typ HDLC (210) mit Zugängen RX,CTS,DCD,TXC,RXC,TX,RTS und DTR ausgestattet ist, welche an die entsprechenden Ein- und Ausgänge des Netzes angeschlossen sind, und mit einem Interrupt-Ausgang (2104) angeschlossen an die genannten Mittel (234,235) der In-Spannung-Setzung des Rests des Terminals (212), mit einem Takteingang, angeschlossen an einen Taktgenerator (238), der permanent unter Spannung steht, und mit Steuerkanälen (2103) des genannnten Busses (2102), und wobei die genannten Mittel zur Isolierung des genannten HDLC-Schaltkreises (210) durch Tristate-Tore (231) gebildet sind, welche in die genannten Steuerkanäle (2103) eingefügt sind.

9. Terminal nach den Ansprüchen 7 oder 8, bei welchem die Tristate-Tore (231) gesteuert werden, um den genannten HDLC-Schaltkreis (210) zu isolieren, sobald die für den Rest des Terminals (212) verwendete Spannung unter einer festgelegten Schwelle liegt, und umgekehrt.

10. Terminal nach einem der Ansprüche 1 bis 9, in welchem die genannten Mittel der In-Spannung-Setzung des Rests des Terminals (12; 212) eine Flip-Flop-Schaltung (134;234) gefolgt von einem Relaisschalter (135;235) umfassen.

FIC. 1

FIG. 2

FIG _ 3

## FIG . 4

## FIG . 9

FIG. 5

| A_4 A_3 A_2 A_1 | A_0 | D_3 D_2 D_1 D_0 |
|---|---|---|
| 0 | 0 | 1 |
| 0 | 1 | 8 |
| 1 | 0 | 9 |
| 1 | 1 | 2 |
| 2 | 0 | 9 |
| 2 | 1 | 3 |
| 3 | 0 | 9 |
| 3 | 1 | 4 |
| 4 | 0 | 9 |
| 4 | 1 | 5 |
| 5 | 0 | 9 |
| 5 | 1 | 6 |
| 6 | 0 | 9 |
| 6 | 1 | 7 |
| 7 | 0 | 0 |
| 7 | 1 | 8 |
| 8 | 0 | 9 |
| 8 | 1 | 8 |
| 9 | 0 | 9 |
| 9 | 1 | A |
| A | 0 | 9 |
| A | 1 | B |
| B | 0 | 9 |
| B | 1 | C |
| C | 0 | 9 |
| C | 1 | D |
| D | 0 | 9 |
| D | 1 | E |
| E | 0 | 9 |
| E | 1 | F |
| F | 0 | 8 |
| F | 1 | 0 |

FIG. 6

17

FIG.7

FIG.8

# FIG . 10

## FIG.11

## FIG. 12